Europäisches Patentamt

European Patent Office

Office européen des brevets

(11) Publication number: **0 311 221 B1**

# EUROPEAN PATENT SPECIFICATION

(45) Date of publication of patent specification: **05.08.92**  (51) Int. Cl.5: **A01B 49/00**

(21) Application number: **88202450.8**

(22) Date of filing: **22.01.86**

(60) Publication number of the earlier application in accordance with Art.76 EPC: **0 189 235**

(54) **Soil cultivating implements.**

(30) Priority: **24.01.85 NL 8500187**

(43) Date of publication of application:
**12.04.89 Bulletin 89/15**

(45) Publication of the grant of the patent:
**05.08.92 Bulletin 92/32**

(84) Designated Contracting States:
**DE FR GB NL**

(56) References cited:
**FR-A- 2 533 408**
**FR-A- 2 536 948**
**US-A- 4 147 117**

(73) Proprietor: **C. van der Lely N.V.**
**Weverskade 10 P.O. Box 26**
**NL-3155 ZG Maasland(NL)**

(72) Inventor: **Van der Lely, Ary**
**10A, Weverskade**
**Maasland(NL)**
Inventor: **Bom, Cornelis Johannes Gerardus**
**16, Laan van Nieuw Rozenburg**
**Rozenburg(NL)**

(74) Representative: **Mulder, Herman et al**
**Octrooibureau Van der Lely N.V. Weverskade**
**10 P.O. Box 26**
**NL-3155 ZG Maasland(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The invention relates to soil cultivating implements provided with a frame and a number of soil working members mounted therein and arranged adjacently in a row extending transversely to the intended direction of travel of the implement, the latter being provided with an arrangement for linking a machine to be combined with the implement.

A suchlike implement is known from the UK Patent GB 2,127,662. The coupling means of this machine comprise a pair of arms, pivotable by means of hydraulic cylinders around axes located on the frame portion and extending from same towards beyond the hind part of the machine. During transport of the combination, the coupled implement is lifted to a position above the first machine and closer to the transporting tractor, so that the three-point hitch of same is not or in a lesser extent exposed to reaction forces from the carried combination. In the very most cases of combinations this construction is very satisfactory, However, in some cases, e.g. when modern, broadly working and therefore heavy implements are to be combined, the parts of this construction are to be designed extremely solidly or, otherwise, the implement to be combined cannot be brought sufficiently close to the tractor.

The invention has for its object an arrangement for the combination with an additional machine such that this machine in a simple way can be brought into a position with respect to the implement, in which position the combination is disposed close to the three-point lifting hitch of the tractor.

In accordance with the invention the arrangement comprises coupling means that are so arranged that they are movable along at least one guide member extending in a substantially vertical plane parallel to the intended direction of travel of the implement. Through the application of this construction the described relatively complicated system of rods for bringing the other machine into a transport position with respect to the implement can be eliminated, while a compact construction of the machine frame can be achieved as well.

On the basis of some embodiments, shown in the Figures, the invention will be further explained hereafter.

Figure 1 shows a plan view of a soil cultivating implement, in particular for preparing a seed bed, that can be provided with the specific features according to the invention.

Figure 2 shows a view according to arrow II in Figure 1, with a part of a supporting member being omitted for the sake of clarity.

Figure 3 shows, on a larger scale, a view according to arrow III in Figure 1.

Figure 4 shows a view according to arrow IV in Figure 3.

Figure 5 shows a side view of the soil cultivating implement according to Figure 1, comprising a construction in accordance with the invention.

Figure 6 shows a side view of a second embodiment of a soil cultivating implement according to Figure 1 with a construction according to the invention, while

Figure 7 shows, on a larger scale, a view taken on the line VII-VII in Figure 6.

The construction shown in the Figures relates to a soil cultivating implement, in particular for preparing a seed bed.

The implement comprises a support frame, extending transversely to the intended direction of travel A, comprising one single frame beam 1, extending at least substantially transversely to the intended direction of travel of the machine and situated at least substantially in a horizontal plane. At some distance from the centre, support beams 2, of U-profile-like formation and extending to the intended direction of travel A of the implement, are fitted on both sides of the support frame on the upper part of the frame beam 1. The support beams 2 are connected at the front with the lowermost part of upwardly extending supports 3 of a rectangular trestle 4. The upwardly extending supports 3 are interconnected on the uppermost part by means of a connection beam 5, extending transversely to the intended direction of travel A and situated at least substantially in a horizontal plane. Between the supports 3 and the connection beam 5, supports 6 are provided in the corners of the trestle 4. The connection beam 5 is connected with the uppermost part of the frame beam 1 by means of diverging supports 7, extending downwardly and rearwardly in an oblique plane. The trestle 4 comprises a three-point hitch for linkage to the three-point lifting device of a tractor.

Two fixation points, constituted by plates 8 are provided at the level of the support beams 2 at the front of the supports 3, while a third fixation point, constituted by plates 9 is provided near the middle of the connection beam 5 at its front.

The extremities of the frame beam 1 are fitted with supports 10, extending obliquely downwardly and rearwardly. Similar supports 10 are fixed spaced apart, on both sides of the middle of the frame beam 1. Between the lower extremities of the respective supports 10, a freely rotatable roller 12, resp. 13 is comprised by means of shafts 11 and bearings. The rollers, thus mounted to the frame beam 1, may be of a design as shown for the roller 12, right hand when viewed in intended direction of travel, i.e. in the version of a packer roller. However, the rollers may also be of a design as shown by means of the left hand roller 13, i.e. a roller comprising on its circumference longitudinal elements, being of rod-like formation and extending helically.

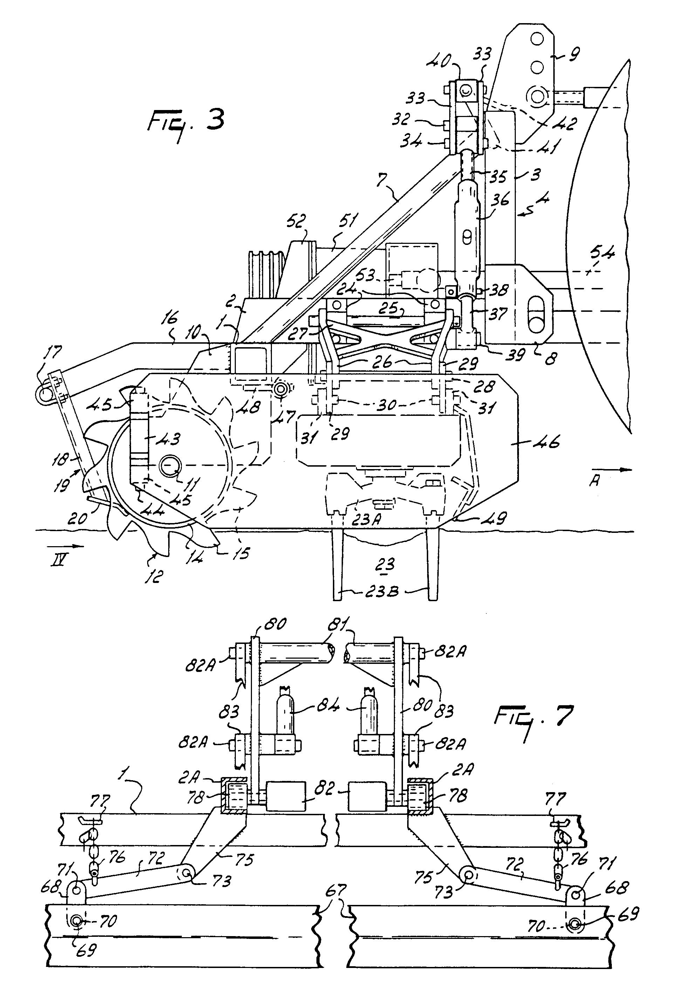

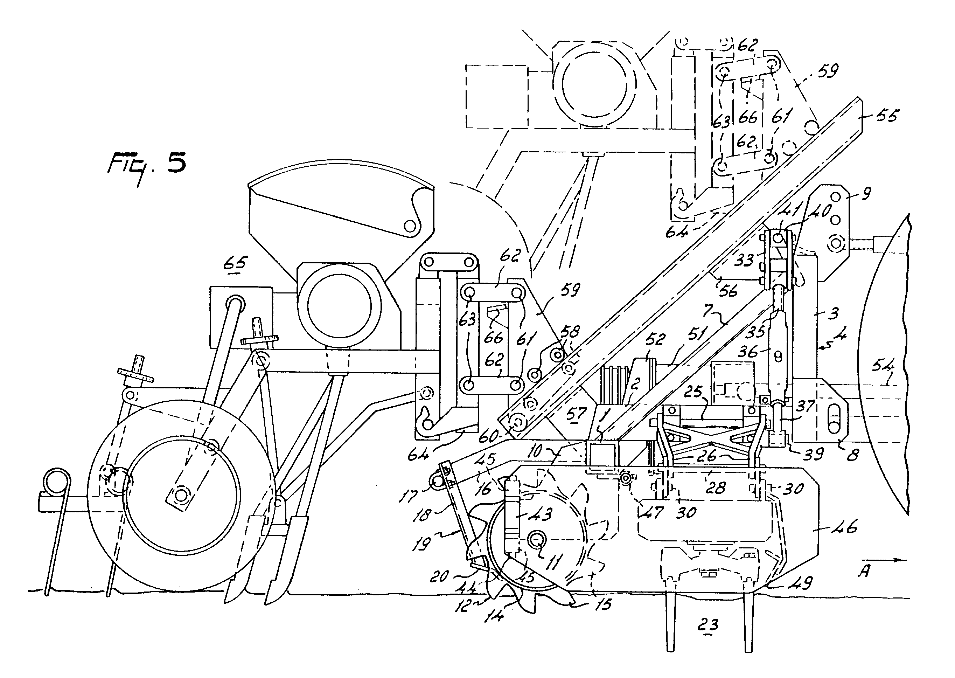

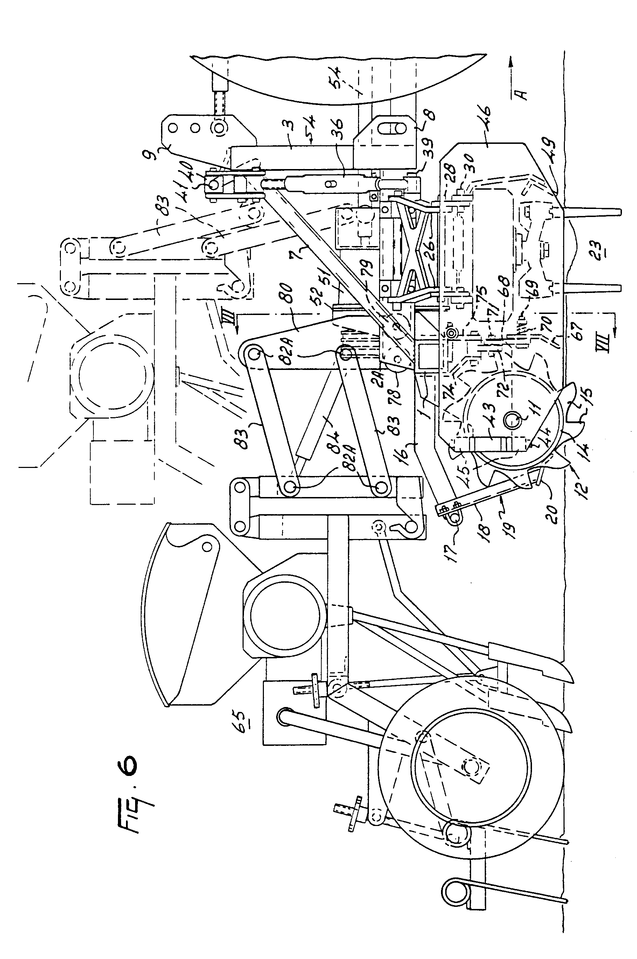

The packer roller 12 comprises a cylindrical support 14, on which crenelated tines 15 are provided in an arrangement with equal spacings. Between the supports 10, a support 17 is fitted, by means of clamp brackets, to the frame beam 1 by means of arms 16, which support, when seen in plan view, is situated behind the axis of rotation of the roller 12. To the support 17, arms 18, extending downwardly, for scrapers 19 are fixed. The scrapers 19 comprise a scraping plate section 20, fitted to the lowermost part of the arms 18. Each plate section 20 extends to the proximity of the crenelated tines 15, whereby the sides directed towards the crenelated tines 15 will extend initially at least substantially parallel, as seen from the rear to the front, to incline subsequently into converging sides, all this in such a way that a V-shaped section will arise, directed obliquely forwardly and downwardly, leaning against the periphery of the cylindrical support 14 in a point where a radian embraces an angle of ± 45° with the vertical, resp. horizontal plane via the axis of rotation of the roller (fig. 3).

As mentioned before, the frame beam 1 forms part of a support frame, connected with the rectangular trestle 4 by means of the support beams 2, extending in the intended direction of travel A, whereby the support frame is supported during machine operation by means of supporting members afforded by the rollers 12, resp. 13, which occupy a fixed position with respect to the support frame. The support frame, supported during machine operation by means of the rollers 12, resp. 13 and trestle 4, provides a support to a box-like frame beam 21, fitted to the support beams 2, beam 21 comprising soil working members 23, rotating about preferably vertical shafts 22, directed upwardly, these soil working members being arranged at an equal mutual spacing of, preferably, about 25 cms. Each of the soil working members 23 comprises a support 23A, at least substantially horizontal, its extremities being fitted with soil working elements 23B, being of tine-like formation and extending downwardly.

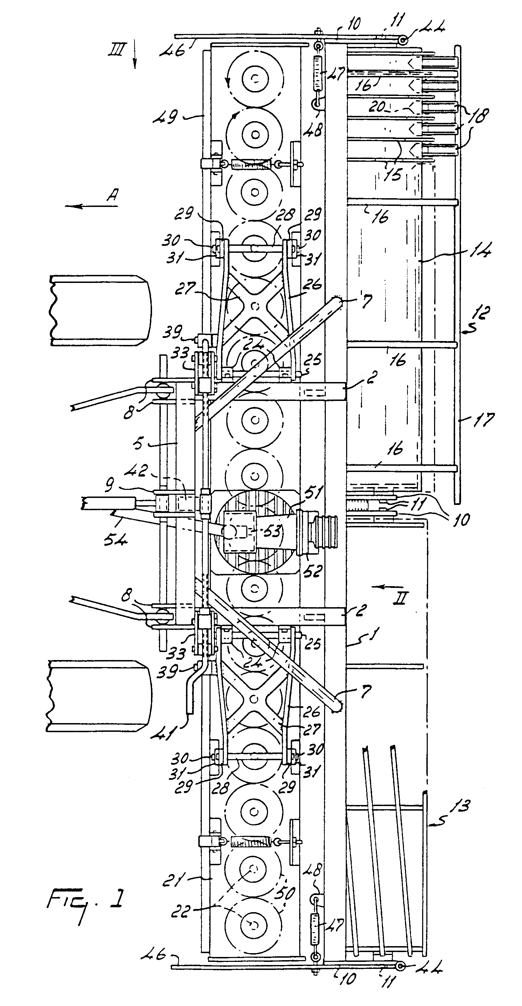

For fixing the box-like frame beam 21, bearing housings 24 are provided at a mutual spacing on the sides of the support beams 2, turned away from one another, these housings supporting a shaft 25, extending into the intended direction of travel A and situated at least substantially parallel to a support beam 2. The shaft 25 comprises pivotable arms 26, leaning against the front, resp. rear side of the bearing housings and extending laterally, with a cross connection linking the pivotable arms (Fig. 3). The extremities of the arms 26, turned away from a support beam 2, brought closer to one another through a flexion (Fig. 1), are interconnected by means of a shaft 28, extending at least substantially parallel to the shaft 25. A shackle 29 can pivot freely about the extremities of the shaft 28, these extremities protruding from the arms 26. Each shackle 29 is fixed, freely pivotably, at its other end by means of a pin 30 to a support 31 near the front, resp. rear side of the box-like frame portion 21.

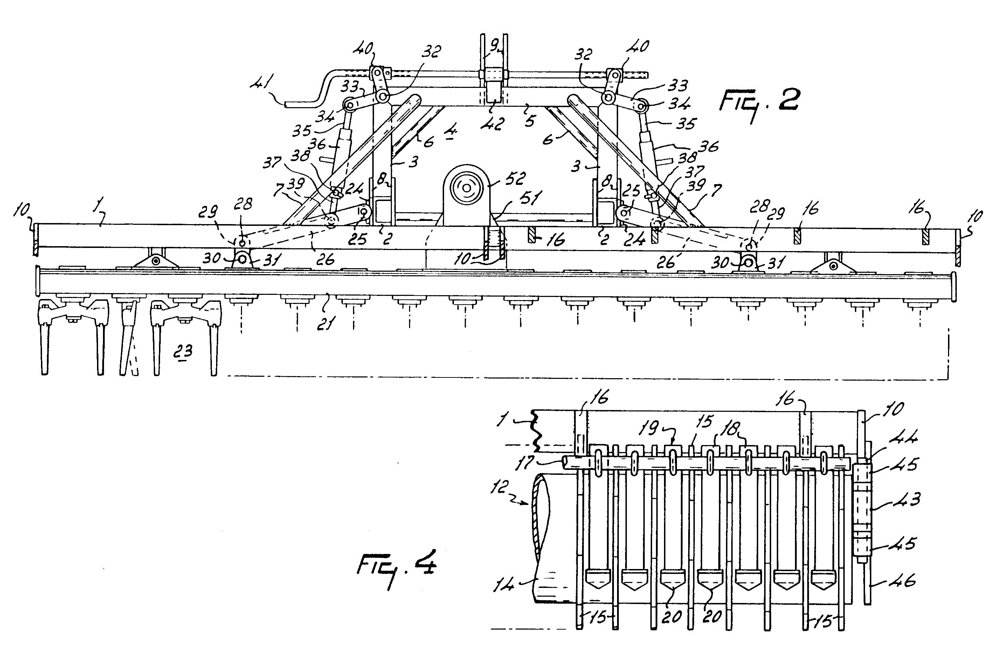

Each of the top corners of the rectangular trestle 4 (Fig. 2) comprises a shaft 32, extending to the intended direction of travel A. About each shaft 32 a bushing of a tumbler 33 is pivotable, each of these tumblers comprising two pairs of arms, spaced apart. Between the extremities of the lowermost arms of each tumbler 33, an extremity of a rod 35 is pivotably fixed by means of pin 34 with a tubular component 36 being fixed, by means of screw-thread, onto this rod, making possible the adjustment of this component with respect to the rod.

At the lowermost part, the tubular component 36 is provided with a rod 37, which can be shifted within the tubular component and which can be fixed with respect to the tubular component by means of a pin 38, which allows conducting through corresponding orifices. The other extremity of the rod 37 is pivotably fitted by means of a pin 39, provided at the front side of the foremost pivotable arm 26. Between the extremities of the uppermost arms of the respective tumblers 33 a screw spindle 41 is provided by means of a pivotable bushing-shaped component 40 with screw-thread, this screw spindle extending transversely to the intended direction of travel A and at least substantially parallel to the topmost side of the rectangular trestle 4.

By means of the shackles 29, pivotable arms 26, rods 37 and tubular components 36 a pivotable suspension is obtained for the box-like frame portion 21, this frame portion being allowed to move upwardly in a vertical plane during machine operation. If the pins 38 are inserted, the total of the rods 37, components 36, rods 35, tumblers 33 and the adjustment member 41, in the version of a screw spindle, constitutes a system of rods, allowing a pivotable movement and also enabling the frame portion to move. This mobility can be eliminated by placing a lock 42, provided pivotably near the centre of the screw spindle 42, between the lips 9 (Fig. 2 and 3).

Each of the supports 10 is provided, at the rear side, with a bushing 43 in which a shaft 44, projecting into an upright, preferably vertical direction, is supported, with bushings 45 being pivotable about this shaft (Fig. 3). The bushings 45 are assembled to the inner side of a plate 46, extending at least substantially parallel to a vertical plane in the intended direction of travel A of the machine and occupying, during machine operation, a position as shown in the Figures 1 and 3. The plate 46 is fitted, near the middle on the inner side, with a coil spring 47, which has its other end hooked into an aperture in a lip 48 situated at the rear side of the frame beam 1 (Fig. 3 and 5). The plate 46 is pulled against the support 10 by means of the spring.

Seen in side view, the plate 46 is mainly rectangular, with the lowermost part of the substantially vertical front extending obliquely, partly downwardly and rearwardly. At the rear, the plate initially extends obliquely, from the horizontal lowermost part, rearwardly and upwardly, then inclining into the virtually vertical rear side, comprising the bushings 45. It will be seen in Fig. 3 that the plate 46 extends from before the frame portion 21 to behind the axis of rotation of the rollers 12, resp. 13, with the coil spring gripping the plate at least substantially near the centre between the back side of the frame portion 21 and the front of the rollers 12, resp. 13.

In the proximity of the frame portion 21, a protection 49 being of an angle iron-like formation is provided at the level of the supports 23A of the soil working members 23, with the aid of which protection stones or other hard objects, present in the soil during machine operation, can be stopped and conducted downwardly in the soil that has been loosened by the soil working members. The protection 49 being spring-loaded, it can pivot forwardly, all this in such a manner that hard objects, possibly getting between the supports 23A of the soil working members 23 and the back side of the protection, can be dismissed.

Within the box-like frame portion 21, each of the shafts 22 of a soil working member 23 is provided with a gear 50 with straight toothing, all this in such a manner that the gears on the shafts of adjacent soil working members 23 are in a mutually driving relation. Near the centre, the shaft of a soil working member 23 is extended upwardly, this extension reaching into a gear box 51, provided on the topmost part of the box-like frame section 21. Within the gear box 51 the extension is engaged, through a conical gear transmission and a speed variation system 52, situated at the rear side of the gear box 51, with a shaft 53, extending to the intended direction of travel and protruding from the gear box at the front. The end of the shaft 53, protruding from the gear box, can be coupled to the tractor PTO-shaft through an intermediate shaft 54.

In Fig. 5, an arrangement is shown for combining the machine according to Figures 1 - 4, with another implement, e.g. the shown seed drill 65. This arrangement is not shown in the Figures 1 - 3. The arrangement comprises two mutually interspaced guide members 55, each constituted by a U-profile, being fixed near the ends of the connecting beam 5 of the trestle 4, by means of support plates 56. It will be seen in Fig. 5 that a guide member 55 projects, at the front, over the topmost linkage point of the three-point attachment, constituted by the plates 9 and, at the rear beyond the axis of rotation of the support rollers 12, resp. 13. The guide members 55, situated at least substantially over the support beams 2, extend parallel in respect of one another and are fixed on the frame beam 1 at the rear by means of supports 57. Both guide members 55 are installed in such a manner that the limbs of the U-profile are directed towards each other. The upper limb of each U-profile constitutes a guide member for coupling means comprising rollers 58, situated on the uppermost and lowermost side and fitted in a freely rotatable manner to a plate-shaped support 59, directed upwards. Each plate-shaped support 59 has at least substantially the shape of a rectangular triangle, with the shortest base and perpendicular situated on the lowermost side and the longest base and perpendicular situated at the front.

In the angle between the shortest base and perpendicular and the hypothenuse, each triangular support 59 is provided with a roller 60. The roller 60 is installed on the shaft of a not shown hydraulic motor and has a toothing on its circumference, which toothing can intermesh with another one, provided on the inner side of the lowermost limb of the U-profile, constituting a guide member 55.

In the proximity of the lowermost and topmost side, the hypothenuse of the triangular support 59 is fitted with a pivot pin 61, about which arms 62, extending to the rear, are freely pivotable. The rear ends of the arms 62 are freely pivotable, being mounted by means of pins 63 to the upwardly directed sides of a rectangular trestle 64. The trestle 64 has a three-point attachment for coupling the three-point system of an implement to be combined with the machine, e.g. with the seed drill shown in this embodiment, which seed drill may have a known design. Underneath the uppermost arms 62, there is a stop 66, against which the lowermost part of the arms involved may eventually lean.

The operation of the assembly described before is as follows. During its operation, the machine is linked to the three-point lifting device of a tractor by means of the three-point attachment provided on the rectangular trestle 4 and each of the soil working members 23 can be made to rotate from the tractor PTO-shaft through the intermediate shaft 54 and the transmission, as described before. In this process, adjacently situated soil working members rotate in mutually opposite directions, as shown by the arrows in Fig. 1, with the soil working elements 23B extending downwardly and being of tine-like formation, working at least adjacent strips of soil.

As mentioned before, the box-like frame portion 1, supporting the soil working members 23, is held by a support construction, situated behind the frame portion and comprising the single frame beam 1, supported by means of the adjacent rollers 12, resp. 13, occupying a fixed position with respect to the frame beam. The support frame is provided with coupling means, situated in front of the frame portion, these means being connected with the frame beam 1 through the support beams 2, extending in the intended direction of travel, and these means comprising the trestle 4, which is linked with the three-point lifting device of the tractor during machine operation. During machine operation and starting from a certain working depth, the box-like frame portion 21 with the soil working members 23, supported by it, is allowed to move freely, in height and vertically, to a certain extent, through the pivotal connection, embracing the shackles 29 and the pivotable arms 26, and having at least two pivotable shafts, extending in the intended direction of travel A. In the process a rod 37 shifts upwardly with respect to the tubular component 36.

As mentioned before, a movement in upward direction of tle box-like frame portion 1 can be eliminated by means of the pins 38 and the lock 42. With the aid of the screw spindle 41, the position of the pivotable arms 26 can be changed through the tumblers 33, as a result of which the working depth of the soil working members 23 is adjusted.

If necessary, a further adaption can be obtained by twisting the tubular components 36 with respect to the rods 35, so that an accurate setting is possible.

If the lock 42 is not situated between the plates 9, the assembly may move farther, with pin 38 fitted, about the pivotable axes 32 before the tumblers 33, so that, beside an individual, vertical height movement by means of every pivotable connection, comprising the pivotable arms 26 and the shackles 29, a total oscillatory movement is possible for the box-like frame portion 1, supporting the soil working members 23.

By means of the plates 46, fitted on both sides, an effective conjunction with the outer soil working members 23 can be obtained, resulting in an efficient crumbling and distribution of the soil near the sides of the row of soil working members. In the process, each plate 46 can deflect about the pivotable shaft 44, against the action of spring 47, this axis being situated at the rear side and extending at least substantially in a vertical plane, making possible an adaption to the structure of the soil and the quantity to be worked. Moreover, the plate can deflect sideways when hitting hard objects, after which the plate will be immediately restored to its original position against the action of the spring 47.

The plate 46 occupying a fixed position with respect to the supporting rollers 12, resp. 13, the lowermost side of the plate will invariably be in the position as shown in Fig. 3. If packer rollers 12 are provided, it can be achieved by means of the scrapers 19, fitted collectively to the tubular holder 17, that soil, possibly lodging between the crenelated tines 15, is scraped off. In the process, the soil is caught from the middle by the point of the V-shaped part of the scraping plate section 20, to be subsequently loosened gradually into the direction of the respective tine crenelations and - as is evident from Fig. 3 - to be smoothed out close over the soil surface, all this in such a manner that virtually no clods are left behind on the tilled strip of land.

As worked out further in Fig. 5, the assembly allows a combination with another implement, e.g. the seed drill 65, shown in working position. If one wants to transport the entire combination, the supports 59 can be moved upwardly, through excitation by a (not shown) hydraulic motor, with the aid of the roller 60 via the guide members 55, till the point when the assembly assumes a position as shown in the Figure by means of dashed lines. A downward movement of the arms 62, constituting a parallelogram, is avoided by the buffers 66, provided at the back of the supports 59. If one wants to restore the entire assembly into a working position again, the supports 59 can be made to move back, along the guide members 55, into the position for operation assisted by the seed drill's own weight.

Although not shown, it will be obvious that for moving the supports upwardly, other utilities can also be used, e.g. a winch installation, which may be mounted on the topmost side of the rectangular trestle 4, possibly to be actuated from the tractor.

In Fig. 6 an embodiment is shown, in which the soil cultivating implement is of virtually the same design as in the previous embodiment. Accordingly, corresponding parts have been indicated by the same reference numbers.

In the embodiment according to Fig. 6, the machine is provided with a crumbling member 67, situated between the row of soil working members 23 and the rotating support members, constituted by the rollers 12, resp. 13. The crumbling member 67 is constituted by a plate, comprising a straight section that extends at least substantially parallel to a vertical direction and a straight section that extends downwardly and rearwardly, in an oblique plane, all this in such a manner that the transition of both sections is situated near the middle of the plate. At a distance from the middle, the plate comprises on both sides a shackle 68, pivotably assembled (Fig. 7). In this construction, the pivotable shaft, extending in the intended direction of travel A, is constituted by a bolt 69, about which a compression spriong 70 is provided, all this in such a way that the plate, with respect to the shackle, can pivot to the rear about an imaginary axis, extending transversely to the intended direction of travel A. Each shackle 68 has a pivotal connection, by means of an axle 71, extending to the intended direction of travel, with one extremity of a pivot arm 72, extending in an oblique plane upwardly and towards the middle of the frame beam 1 (Fig. 7), the other extremity being fitted pivotably, by means of a shaft 73 situated parallel to the shaft 71, between two supports 74 and 75, mounted to the support beams 2 and to the front resp. rear side of the frame beam 1. Near the shackle 68, each arm 72 is provided with a chain 76, which may work in conjunction with a hook 77, provided on the rear side of the frame beam 1. By means of the depicted crumbling member 67 the soil, moved to the rear by the soil working members 23, can be caught, as a consequence of which this soil will remain longer within reach of the soil working members and the crumbling can be intensified, after which this soil can flow away in a layer of uniform thickness via the lowermost part of the member into the direction of the support rollers 12, resp. 13. When meeting hard objects, the member is allowed to deflect backwardly about the imaginary cross axis mentioned before, against the action of the spring 76, fitted about the bolts 69.

By means of the pivotable arms 72 and the shackles 68, constituting a pivotal connection, comprising at least two shafts, extending in the intended direction of travel A, a compact construction makes it possible to obtain a suspension for the crumbling member of such a nature, that this member is enabled to move in a vertical direction during operation and, thus, to maintain its working position. By means of the chains 76, the required height of the crumbling member 67 can be adjusted, while at the same time the beam is kept from moving downwardly too far during transport. It is also possible, by means of the chains 76, to bring the crumbling member 67 into a position, in which it is out of operation. This embodiment also embraces the possibility to combine the machine with another implement. By way of example of such an implement, the seed drill 65 as shown in Fig. 5 is referred to.

In this embodiment, the support beams 2A are of U-profile-like formation, constituting guide members that are so arranged that the limbs of the U-profiles are directed towards one another. The rollers 78 and 79, provided within the limbs of each U-profile, support a substantially triangular plate 80, extending to an upward direction. The plates are interconnected by means of a beam 81 (Fig. 7). A transfer of the plates 80 with respect to the guide members 2A can be effected by means of the rollers 78. To this effect, the rollers 78 are arranged on the shaft of a hydraulic motor 82 and equipped with a toothing that can intermesh with a toothing on a limb of the guide member 2A. The rear side of each of the plates 80 is provided with pivotable arms 83, arranged by means of axles 82A, which constitute sides of a parallelogram and have a greater length than the arms 62 pertaining to the first embodiment. The arms 83 are pivotably connected with a trestle provided with a three-point attachment for linkage to the seed drill 65. A hydraulic ram 84 is arranged between the hindmost pivot point of each topmost arm 83 and the foremost pivot point of each lowermost arm 83, all this in such a manner that, for bringing the assembly into a transport position, the seed drill 65 can be lifted by means of the hydraulic rams and the arms, before the assembly is tranposable at least substantially parallel to the intended direction of travel A by means of the supports 80, movable with respect to the guide members 2A, till the point when the assembly has assumend a position as shown by the dashed lines in Fig. 6. For transfer into the working position, a reversed adjustment can be carried out. Here, too, other means of adjustment, e.g. a winch, can be applied.

By means of the support frame described before comprising a single frame beam, situated behind the soil working members, this beam being connected with a linkage trestle via support beams 2, resp. 2A, extending forwardly over the row of soil working members, this beam moreover being supported by means of at least one support member 12, resp. 13, a simple and yet strong construction is obtained for the fixation of a frame portion 21, holding the soil working members 23. The assembly is allowed to be compact in that the frame portion, holding the soil working members, is transposable in a vertical direction with respect to the support frame, enabled to do so by the specific pivotal connection. The pivotal connection also comprises means for the working depth adjustment of the soil working members.

## Claims

1. A soil cultivating implement provided with a frame and a number of soil working members (23) mounted therein and arranged adjacently in a row extending transversely to the intended direction of travel of the implement, the latter being provided with an arrangement (55, 58, 59, 2A, 78, 79, 80) for linking a machine (65) to be combined with the implement, characterized in that the arrangement comprises coupling means (58, 59, 78, 79) that are so arranged that they are movable along at least one guide member (55, 2A) in a substantially vertical plane parallel to the intended direction of travel (A) of the implement.

2. A soil cultivating implement as claimed in claim 1, characterized in that the guide member (55) furthermore extends, in an oblique plane, upwardly and forwardly.

3. A soil cultivating implement as claimed in claim 1, characterized in that the guide member (2A) extends at least substantially into a horizontal direction.

4. A soil cultivating implement as claimed in any one of the claims 1 - 3, characterized in that rollers (58, 59, 78, 79) are available for transposing the coupling means along the guide member (55, 2A).

5. A soil cultivating implement as claimed in claim 4, characterized in that drive means are provided comprising roller (60) with a toothing, allowing the intermeshing with a toothing on the guide member (55).

6. A soil cultivating implement as claimed in claim 5, characterized in that a guide member (55) is constituted by a U-profile, of which the lowermost limb has a toothing, which can intermesh with the roller (60) with toothing, arranged on a support (59) of the coupling means.

7. A soil cultivating implement as claimed in claim 6, characterized in that said support (59) is connected with a three-point linkage (64) by means of arms (62), movable in height and extending in the intended direction of travel (A).

**Revendications**

1. Machine pour cultiver le sol, munie d'un châssis et d'un certain nombre d'organes de travail du sol (23)montés dans celui-ci et disposés adjacents entre eux en une rangée s'étendant transversalement au sens de marche prévu pour la machine, cette dernière étant munie d'un dispositif (55, 58, 59, 2A, 78, 79, 80) pour relier une machine (65) destinée à être combinée avec la machine, **caractérisée** en ce que le dispositif comprend des moyens d'accouplement (58, 59, 78, 79) qui sont disposés de manière à être mobiles le long d'au moins un organe de guidage (55, 2A) dans un plan sensiblement vertical parallèle au sens de marche (A) prévu pour la machine.

2. Machine pour cultiver le sol selon la revendication 1, caractérisée en ce que, de plus, l'organe de guidage (55) s'étend dans un plan oblique, vers le haut et vers l'avant.

3. Machine pour cultiver le sol selon la revendication 1, caractérisée en ce que l'organe de guidage (2A) s'étend au moins sensiblement dans un sens horizontal.

4. Machine pour cultiver le sol selon l'une quelconque des revendications 1 à 3, caractérisée en ce que des galets (58, 59, 78, 79) sont disponibles pour transposer les moyens d'accouplement le long de l'organe de guidage (55, 2A).

5. Machine pour cultiver le sol selon la revendication 1, caractérisée en ce que des moyens d'entraînement sont prévus, comprenant un rouleau denté (60) pouvant engrener avec une denture sur l'organe de guidage (55).

6. Machine pour cultiver le sol selon la revendication 5, caractérisée en ce qu'un organe de guidage (55)est constitué par un profilé en U dont l'aile la plus basse a une denture qui peut engrener avec le rouleau denté (60), disposé sur un support (59) des moyens d'accouplement.

7. Machine pour cultiver le sol selon la revendication 6, caractérisée en ce que ledit support (59) est relié à un dispositif de liaison à trois points (64) au moyen de bras (62) mobiles en hauteur et s'étendant dans le sens de marche (A) prévu.

**Patentansprüche**

1. Bodenbearbeitungsgerät mit einem Rahmen und mehreren darin angebrachten Bodenbearbeitungsgliedern, die nebeneinander in einer Reihe quer zur Arbeitsrichtung des Gerätes angeordnet sind, das mit einer Einrichtung (55, 58, 59, 2A, 78, 79, 80) zum Anschließen einer mit dem Gerät zu kombinierenden Maschine (65) versehen ist,
dadurch gekennzeichnet, daß die Einrichtung Kupplungsmittel (58, 59, 78, 79) aufweist, die derart angeordnet sind, daß sie entlang mindestens eines Führungsgliedes (55, 2A) in einer zur Arbeitsrichtung (A) des Gerätes parallelen, im wesentlichen vertikalen Ebene bewegbar sind.

2. Bodenbearbeitungsgerät nach Anspruch 1, dadurch gekennzeichnet, daß sich das Führungsglied (55) außerdem in einer schrägen Ebene nach oben und vorne erstreckt.

3. Bodenbearbeitungsgerät nach Anspruch 1, dadurch gekennzeichnet, daß sich das Führungsglied (2A) mindestens im wesentlichen in einer horizontalen Richtung erstreckt.

4. Bodenbearbeitungsgerät nach einem der Ansprüche 1 bis 3, dadurch gekennzeichnet, daß Rollen (58, 59, 78, 79) zur Verlagerung der Kupplungsmittel entlang des Führungsgliedes (55, 2A) vorhanden sind.

5. Bodenbearbeitungsgerät nach Anspruch 4, dadurch gekennzeichnet, daß Antriebsmittel vorgesehen sind, die gezahnte Rollen (60) aufweisen, welche mit einer Zahnung am Führungsglied (55) in Eingriff zu bringen sind.

6. Bodenbearbeitungsgerät nach Anspruch 5, dadurch gekennzeichnet, daß ein Führungsglied (55) durch ein U-Profil gebildet ist, dessen unterer Steg eine Zahnung aufweist, die mit der gezahnten Rolle (60) in Eingriff zu bringen ist, welche an einer Stütze (59) der Kupplungsmittel angebracht ist.

7. Bodenbearbeitungsgerät nach Anspruch 6, dadurch gekennzeichnet, daß die Stütze (59) mit einem Dreipunkt-Anschluß (64) mittels Armen (62) verbunden ist, welche höhenbeweglich sind und sich in Arbeitsrichtung (A) erstrecken.

Fig. 1

FIG. 2

FIG. 4

FIG. 3

FIG. 7

FIG. 5

Fig. 6